**Europäisches Patentamt**

**European Patent Office**

**Office européen des brevets**

(19)

(11) Veröffentlichungsnummer: **0 080 214**
A1

(12) **EUROPÄISCHE PATENTANMELDUNG**

(21) Anmeldenummer: **82110918.8**

(22) Anmeldetag: **25.11.82**

(51) Int. Cl.³: **G 06 F 11/00**

(30) Priorität: **25.11.81 DE 3146735**

(43) Veröffentlichungstag der Anmeldung: **01.06.83**
**Patentblatt 83/22**

(84) Benannte Vertragsstaaten: **AT BE CH FR GB IT LI NL SE**

(71) Anmelder: **ZI Gesellschaft für Zeit- und Informationserfassung mbH, Fraunhoferstrasse 5/1, D-8033 Martinsried (DE)**

(72) Erfinder: **Grawe, Henning, Dipl.-Ing., Klothstrasse 6, B-4720 Kelmis (BE)**

(74) Vertreter: **Patentanwälte TER MEER - MÜLLER - STEINMEISTER, Triftstrasse 4, D-8000 München 22 (DE)**

(54) **Selbstüberwachungseinrichtung für programmsteuerbare Ablaufsteuerschaltkreise.**

(57) Die Selbstüberwachungseinrichtung für programmsteuerbare Ablaufsteuerschaltkreise, insbesondere Mikroprozessoren, mit Ausgangsanschluß zur Meldung von Befehl-Abrufphasen prüft über eine Zeitüberwachungsschaltung (10, 20) den Zeitabstand zwischen einer bestimmten Anzahl (vorzugsweise zwei) von aufeinanderfolgenden Meldeimpulsen (SYNCH) und liefert einen RESET-Puls zur Auslösung eines Wiederanlaufs des Programms, sobald die festgelegte Anzahl von Meldeimpulsen innerhalb einer vorgegebenen Zeitspanne nicht erreicht wird. Mit einer bistabilen Schaltstufe (30) läßt sich ergänzend sicherstellen, daß auch der Versuch, einen Befehl in einem nicht erlaubten Adreßbereich auszuführen, unterbrochen und ein Zwangs-RESET-Puls für einen Wiederanlauf erzeugt wird. Durch eine zweite Ergänzung in Form eines mitgeführten Befehlslistendecoders wird auch ein fehlerhaftes Arbeiten innerhalb des erlaubten Adreßbereiches unterbunden.

EP 0 080 214 A1

Beschreibung

Die Erfindung betrifft eine Selbstüberwachungseinrichtung für programmsteuerbare Ablaufsteuerschaltkreise gemäß dem Oberbegriff des Patentanspruchs 1.

Digitale, sequentiell arbeitende Ablaufsteuersysteme, wozu insbesondere auch Mikroprozessoren zählen, sind taktgesteuert, d. h. die Steuerung erfolgt über ansteigende oder abfallende Impulsflanken. Ein hierbei auftretendes Problem ist die Unterscheidung von Nutzimpulsen und Störimpulsen. Solche Störungen sind grundsätzlich in jedem System der hier zu beschreibenen Art vorhanden, wobei Störimpulse zu berücksichtigen sind, die beispielsweise aus dem Netz stammen, über Kabel von angeschlossenen Peripheriegeräten eingeleitet werden, durch elektrostatische Aufladungen beim Berühren des Geräts oder durch interne Störungen entstehen können, die durch Übersprechen bei nicht idealer Schaltungsdimensionierung, durch sogenanntes Popkorn-Rauschen oder dergleichen auftreten. Die übliche Abhilfe gegen solche Störungen ist eine gute gekoppelte Abschirmung, die Filterung über Netzfilter und dergleichen. Eine vollständige Sicherheit gegen Störimpulse insbesondere aufgrund interner Ursachen ist in keinem Fall zu erreichen.

Die gefürchteten Folgen solcher Störungen können in einem Mikroprozessor, im folgenden auch kurz "CPU" genannt (CPU = Central Processing Unit = Zentralprozessor), dazu führen, daß die internen Register willkürlich und fehlerhaft verändert werden. Insbesondere führt ein falsches Setzen und Verändern des Programmzählers der CPU zur Abarbeitung eines Programms, das nicht mehr dem normalen, vom Programmierer vorgesehenen Programm entspricht. Das kann beispielsweise dazu führen, daß der Mikroprozessor versucht, an einer Stelle ein Programm abzuarbeiten, an der kein Programm vorgesehen ist. Es kann des weiteren dazu führen, daß der Mikroprozessor versucht, an einer Stelle einen Befehl zu lesen, an der kein Befehl steht, was wiederum dazu führt, daß Daten-Bytes als Befehle interpretiert werden. Dies wiederum kann dazu führen, daß die CPU stehenbleibt. Außerdem können nichterlaubte Befehle dazu führen, daß wichtige Daten in einem der Schreib-Lese-Speicher (RAM) grundlegend verändert werden.

Der Erfindung liegt damit die Aufgabe zugrunde, eine Selbstüberwachungseinrichtung für programmsteuerbare Ablaufsteuerschaltkreise insbesondere in Form von Mikroprozessoren, die über einen Ausgangsanschluß zur Meldung sogenannter Fetch-Cycles verfügen, zu schaffen, mit der sich ein Wiederanlauf eines Programms oder Teilprogramms erreichen läßt, wenn ausgelöst durch Störimpulse ein falscher Programmablauf versucht wird und/oder versucht wird, einen Befehl an Stellen zu lesen, wo keine Befehle stehen.

Die erfindungsgemäße Lösung ist im Patentanspruch 1 angegeben.

Vorteilhafte Ergänzungen und Weiterbildungen des Erfindungsgedankens sind in Unteransprüchen gekennzeichnet.

Die erfindungsgemäße Selbstüberwachungsschaltung erfüllt folgende wichtige Funktionen:

1. Nach einem Stehenbleiben der Ablaufsteuerschaltung (der CPU) wird ein Wiederanlauf durch einen zwangsweise erzeugten RESET-Impuls erreicht, z. B. nach Lesen eines illegalen Operations-Codes, z. B. des Codes 02, bei dem unter der Handelsbezeichnung CPU 6502 bekannten Mikroprozessor.

0080214

- 4 -

2. Der Versuch, einen Befehl in einem nichterlauben Adreßbereich auszuführen, wird abgebrochen und es erfolgt
ebenfalls ein Wiederanlauf durch einen Zwangs-RESET-
Impuls.

Eine vorteilhafte Ergänzung des Erfindungsgedankens erfüllt folgende zusätzliche Funktion:

3. Der Versuch, einen Befehl in einem erlaubten Adreßbereich auszuführen, jedoch an einer Stelle, an der kein
Befehl steht, wird abgebrochen und es erfolgt die Erzeugung eines Zwangs-RESET-Impulses mit Wiederanlauf.

Die erfindungsgemäße Schaltung zur Selbstüberwachung bietet den weiteren Vorteil, daß sich

4. auf einfache Weise RESET-Impulse genau definierter, jedoch einstellbarer Länge erzeugen lassen, so daß eine
Anpassung an unterschiedliche Systeme und Taktfrequenzen
leicht erreicht wird.

Mit einer weiteren ergänzenden Schaltungsmaßnahme läßt
sich eine weitere Funktion erfüllen, nämlich:

5. Ein automatischer "Power-On → RESET", d. h., es wird
nach dem Einschalten der Stromversorgung zwangsweise
ein RESET-Impuls erzeugt, der den automatischen
Programmanlauf erzwingt.

Die Erfindung ist grundsätzlich für alle Ablaufsteuerschaltungen, insbesondere Mikroprozessoren geeignet, die
über eine Ausgangsleitung verfügen, an der eine Meldung
erfolgt, wann sich die CPU in einer Befehl-Ablaufphase,
also in ihrem sogenannten "Fetch-Cycle" befindet. Darunter wird derjenige Zeitabschnitt verstanden, in dem die
CPU über  den Datenbus einen Befehl liest.

Die Erfindung und vorteilhafte Einzelheiten werden nachfolgend unter Bezug auf die Zeichnung in beispielsweisen
Ausführungsformen näher erläutert. Es zeigen:

Fig. 1    ein Prinzip-Blockschaltbild einer Selbstüberwachungseinrichtung gemäß der Erfindung;

Fig. 2    in zeitbezogener Darstellung den Signalverlauf
          an einzelnen Punkten der Schaltung nach Fig. 1;

Fig. 3    eine vorteilhafte Ergänzung zur Schaltung nach

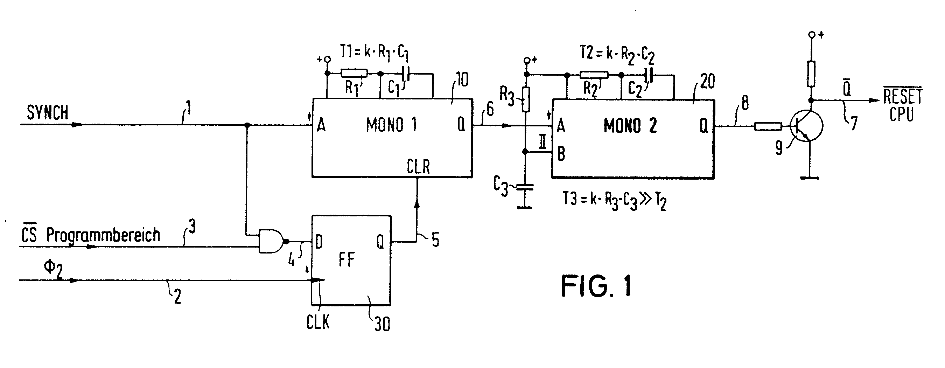

          Fig. 1 und

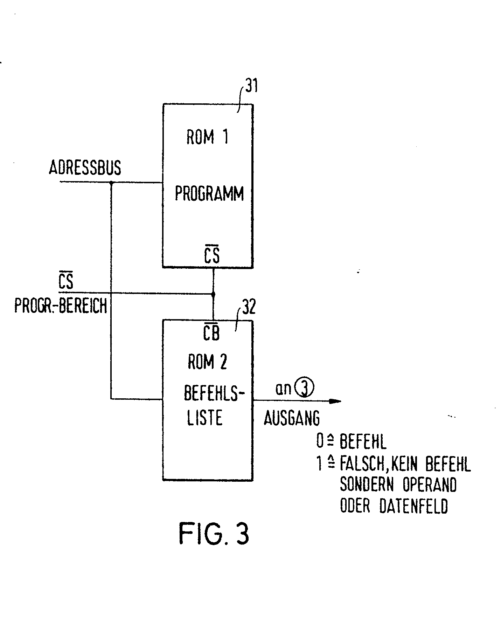

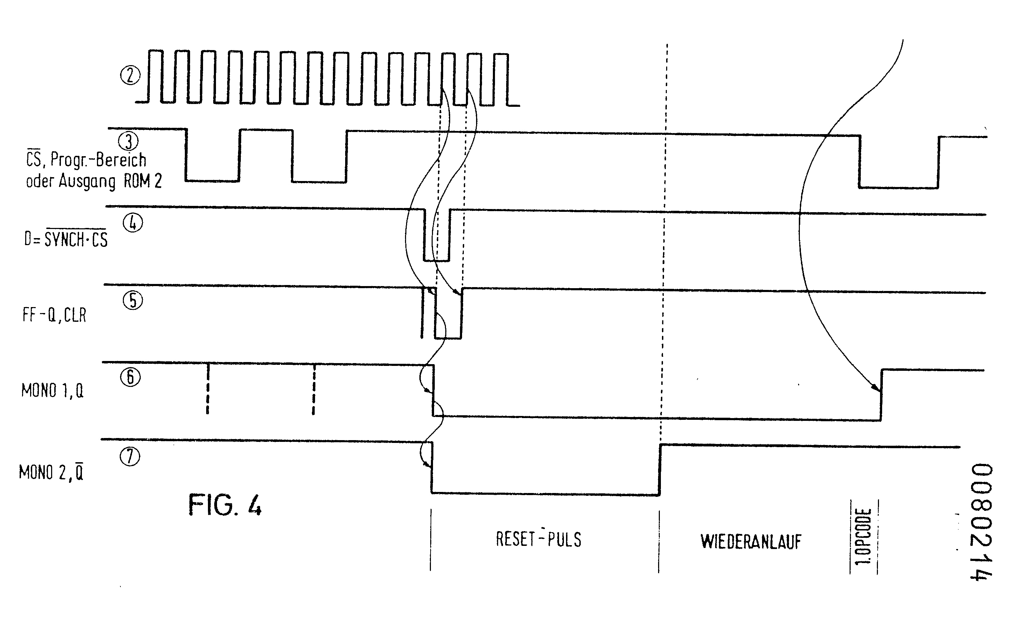

Fig. 4    die zeitbezogene Darstellung von Signalen an verschiedenen Punkten der Schaltung nach Fig. 1 bei
          gleichzeitiger Berücksichtigung der Schaltungsergänzung nach Fig. 3.

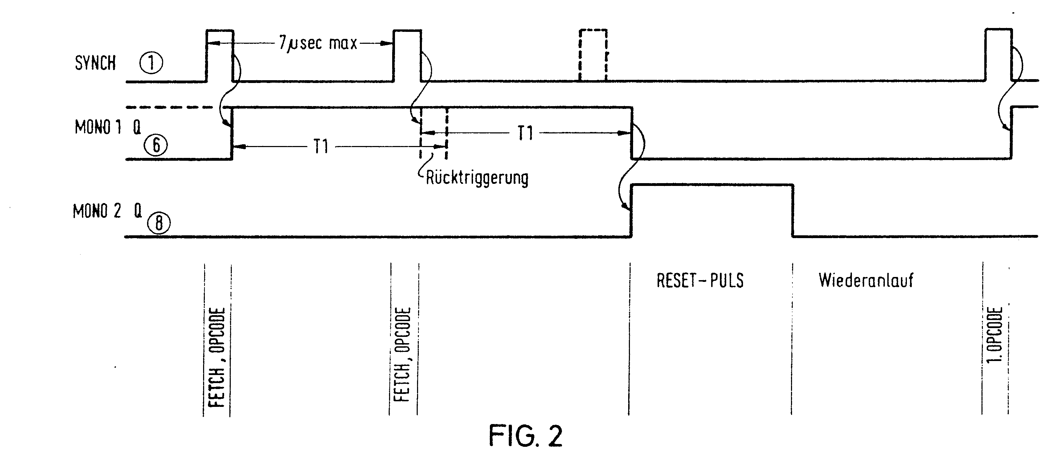

In Fig. 1 ist eine Signalleitung 1 mit "SYNCH" bezeichnet.
Diese SYNCH-Leitung 1 ist immer dann für jeweils einen bestimmten Zeitschlitz von beispielsweise 1 µsec, d. h. während eines Zyklus auf dem logischen Signalpegel "hoch",
wenn    ein Befehl auf dem Datenbus einer nichtgezeigten
Mikroprozessoranordnung liegt. Der Abstand zweier SYNCH-
Pulse (vgl. auch Fig. 2), d. h. der Abstand zweier aufeinanderfolgender Befehle, ergibt sich beispielsweise als
Maximalwert daraus, wie lange die CPU zur Ausführung eines bestimmten Befehls braucht. Im Falle eines üblichen
und unter der Handelsbezeichnung "CPU 6502" im Handel befindlichen Mikroprozessors kann bei einer Taktfrequenz von
1 MHz für einige Befehle eine Maximaldauer von 7 µsec maßgeblich sein, d.h. bei einwandfreiem Arbeiten des Prozessors
muß spätestens alle 7 µsec eine neue Befehl-Abrufphase
(Fetch-Cycle) folgen, also ein neuer SYNCH-Puls. Daraus wird
zur Verwirklichung der oben erwähnten Funktion (1)
folgendes eindeutiges Kriterium hergeleitet:

Wenn nach einem SYNCH-Puls nicht spätestens nach 7 µsec der nächste SYNCH-Puls erscheint, so liegt ein Fehler vor, d.h. die CPU ist entweder stehengeblieben oder arbeitet anderweitig fehlerhaft. Durch die Selbstüberwachungsschaltung wird die CPU durch einen Zwangs-RESET-Puls zu einem erneuten Wiederanlauf gezwungen. Der für diese Funktion erforderliche Teil der Schaltung wird zunächst nachfolgend beschrieben.

Wie das Schaltbild der Fig. 1 zeigt, gelangen die auf der Leitung 1 auftretenden SYNCH-Pulse unmittelbar auf einen Triggereingang A eines mit "MONO 1"     bezeichneten monostabilen Multivibrators 10, dessen astabile Standzeit oder Eigenzeit T1 etwas länger gewählt ist als der bei ordnungsgemäßem Programmablauf auftretende Zeitabstand zweier Meldeimpulse, also für das obige Beispiel länger als 7 µsec, beispielsweise mindestens etwa 8 µsec. Der Ausgang 6 des Multivibrators 10 bleibt so lange auf logischem Pegel "hoch", wie an seinem Eingang A regelmäßig durch die SYNCH-Pulse eine Rücktriggerung erfolgt. Bleibt ein SYNCH-Puls länger als die Eigenzeit T1 des Multivibrators 10 aus, so kippt dieser Multivibrator 10 zurück und triggert damit einen weiteren, mit "MONO 2" bezeichneten zweiten monostabilen Multivibrator 20. Dieser zweite Multivibrator 20 erzeugt seinerseits an einem Ausgang 8 einen RESET-Puls definierter Länge, der im gewählten Beispiel über einen Inverter 9 invertiert und auf gewünschten Pegel gebracht wird, und einen Wiederanlauf der (nicht dargestellten) CPU erzwingt. Nach dem Wiederanlauf wird der erste Multivibrator 10 durch den ersten SYNCH-Puls erneut getriggert, so daß die Selbstüberwachungsschaltung wiederum betriebsbereit ist zur Überwachung weiterer Störungen und Fehler.

Die Signaldiagrammdarstellung der Fig. 2 läßt die Verhältnisse an den Schaltungspunkten 1, 6 und 8, also am Eingang
A des ersten Multivibrators 10, an dessen Ausgang 6 sowie
am Ausgang 8 des zweiten Multivibrators 20 erkennen. Die
ersten beiden SYNCH-Pulse liegen ordnungsgemäß vor, so daß
der Multivibrator 10 vor Ablauf seiner Eigenzeit T1 rückgetriggert wird. Im gewählten Beispiel fehlt jedoch der dritte und daher nur gestrichelt angedeutete SYNCH-Puls, so
daß jetzt die Eigenzeit T1 des Multivibrators 20 überschritten wird und an dessen Ausgang Q ein Pegelwechsel
stattfindet, der zu einer sofortigen Triggerung des Multivibrators 20 und damit zur Erzeugung des RESET-Pulses definierter Länge am Ausgang 8 des Multivibrators 20 führt.
Der daraufhin folgende (erste) SYNCH-Puls triggert wiederum
den Multivibrator 10, so daß die Selbstüberwachungsschaltung erneut zur Fehlerüberwachung bereitsteht.

Die oben erläuterte Funktion (2), nämlich der Abbruch des
Versuchs, einen Befehl in einem nichterlaubten Adreßbereich
auszuführen, wird mit einer ebenfalls in Fig. 1 dargestellten Schaltungsergänzung erreicht, deren weitere Funktion
unter Bezug auf Fig. 4 verdeutlicht wird.

Diese Schaltungsergänzung besteht im wesentlichen aus einer
bistabilen Schaltstufe, also etwa einem D-Flip-Flop 30, das
an einem Takteingang CLK über eine Taktleitung 2 mit einem
von einem externen Takt-Generator (nicht gezeigt) gelieferten Systemtakt $\phi_2$ beaufschlagt wird. Dieser Systemtakt
kann beispielsweise die für viele Mikroprozessoren maßgebliche Taktfrequenz von 1 MHz aufweisen. Dieser Systemtakt $\phi_2$ liegt immer an, unabhängig davon, ob die CPU arbeitet. Ein D-Eingang 4 des D-Flip-Flops 30 ist an den
Ausgang eines nicht näher bezeichneten NAND-Glieds angeschlossen, dessen einer Eingang einerseits durch die
SYNCH-Pulse und dessen anderer Eingang 3 durch sogenannte

Chip-Select-Pulse $\overline{CS}$ beaufschlagt ist, wobei durch die Negation des Chip-Select-Pulses zum Ausdruck gebracht ist, daß es sich um eine CPU mit negativer Logik handelt. Unter dem Begriff "Chip-Select" soll die decodierte Restadresse verstanden werden, mittels der ein angesprochener peripherer Schaltkreis eingeschaltet wird. Ein Chip-Select-Programmbereich ist also immer dann eingeschaltet (im gewählten Beispiel also "aktiv niedrig"), wenn der betreffende Schaltkreis eingeschaltet ist, in dem sich ein jeweils abzuarbeitendes Programm befindet. Der Q-Ausgang 5 des D-Flip-Flops 30 ist mit dem Räum-Eingang CLR des monostabilen Multivibrators 10 verbunden.

Zur Verwirklichung der obigen Funktion (2) werden nun durch die angegebene Schaltung folgende Kriterien festgelegt:
Immer dann, wenn ein SYNCH-Puls auf der Leitung 1 erscheint, muß ein Chip-Select-Puls $\overline{CS}$ gleichzeitig erscheinen, der zu dem Adreßbereich des Systemsgehört, in dem sich ein abzuarbeitendes Programm befindet. Ist dies nicht der Fall, d. h. erscheint ein SYNCH-Puls ohne einen (erlaubten) Chip-Select-Puls $\overline{CS}$, so wird daraus geschlossen, daß die CPU versucht, einen Befehl an einer Stelle abzuarbeiten, an der sich kein Befehl befindet. Dieser Versuch wird nun durch einen zwangsweise erzeugten RESET-Impuls vor seiner Ausführung abgebrochen, was nachfolgend unter Bezug auf die Fig. 4 erläutert wird.

Am Eingang des D-Flip-Flops 30 liegt die logische NAND-Verknüpfung aus dem SYNCH-Puls auf der Leitung 1 und einem (erlaubten) Chip-Select-Puls $\overline{CS}$. Die Information am Eingang D des D-Flip-Flops 30 wird mit dem Takt $\phi_2$ in das D-Flip-Flop 30 übernommen und gelangt über den Q-Ausgang auf den Räum-Eingang CLR des monostabilen Multivibrators 10. Ein SYNCH-Puls und ein nicht vorhandener (erlaubter) $\overline{CS}$-Puls ergibt als Nand-Verknüpfung in Bool'scher Algebra (1·1=0) logisch Null am Eingang D. Dies führt zu einem sofortigen Zurücksetzen des Multivibrators 10, wodurch ein RESET-Puls im Multivibrator 20 ausgelöst wird, der sofort das Abarbeiten eines unerlaubten Befehls verhindert und einen Wiederanlauf erzwingt.

Es sei ausdrücklich darauf hingewiesen, daß bereits der Versuch, den Befehl auszuführen, abgebrochen wird. Mit anderen Worten: Es wird nicht erst ein Befehl ausgeführt und dann über einen RESET-Puls ein Wiederanlauf erzeugt, sondern der Versuch wird bereits unmittelbar verhindert. Dies ist ein entscheidender Vorteil der Erfindung.

Die obige Funktion (4), nämlich das Erzeugen eines RESET-Pulses definierter und einstellbarer Länge wird durch die Beschaltung des Multivibrators 20 mit den Eigenzeit-Einstellgliedern $R_2$, $C_2$ erreicht.

Die Funktion (5), nämlich "automatischer Power-On → RESET" wird durch eine weitere Beschaltung mit einem Zeitglied $R_3$, $C_3$ an einem Schmitt-Triggereingang des Multivibrators 20 erreicht, wobei ein zweiter Signaleingang B des Multivibrators 20 an den Verbindungspunkt der Reihenschaltung eines Widerstands $R_3$ und eines Kondensators $C_3$ angeschlossen ist, die zwischen einen +-Stromversorgungsanschluß und Masse geschaltet sind. Die Zeitkonstante des Zeitglieds $R_3$, $C_3$ ist so gewählt, daß $T_3 = kR_3C_3 \gg T_2$ gilt. Durch diese Bedingung ist sichergestellt, daß nach Einschalten der Stromversorgung alle Baugruppen, insbesondere die CPU, aber auch die Selbstüberwachungsschaltung, den "eingeschwungenen" Betriebszustand erreicht haben, bevor der Power-On → RESET-Puls am Ausgang 8 des Multivibrators 20 erscheint.

Mit der in Fig. 3 gezeigten Ergänzung zur Schaltung nach Fig. 1 läßt sich die obige Funktion (3) erreichen, nämlich der Abbruch des Versuchs, in einem erlaubten Programmbe-

- 10 -

reich einen Befehl abzuarbeiten an einer Stelle, wo nicht der Befehl, d.h. in einer üblichen Programmsprache, der OPCODE steht, sondern entweder nur ein Operand oder ein Datenfeld.

Um diese Funktion zu erreichen, wird am Adreßbus der CPU parallel zu einem mit ROM 1 bezeichneten Programmspeicher 31 ein zweiter Befehlslisten-Speicher 32 geschaltet, der mit ROM 2 bezeichnet ist. Dieser Befehlslisten-Speicher 32 enthält eine Befehlsliste der Art, daß an seinem Ausgang 3 (entsprechend der $\overline{CS}$-Pulsleitung 3) immer dann eine logische "0" liegt, wenn die angewählte Adresse einer tatsächlichen Adresse entspricht, die einen Befehl enthält. Andererseits erscheint immer dann eine logische "1", wenn dort kein Befehl, sondern ein Operand oder ein Datenfeld vorliegt. Das Ausgangssignal gelangt anstelle des oben erwähnten, den Programmbereich anzeigenden $\overline{CS}$-Pulses (vgl. Schaltbild der Fig. 1) an den mit 3 bezeichneten Eingang des NAND-Glieds. Die Funktion D=$\overline{SYNCH \cdot \overline{CS}}$ in Zeile ④ der Fig. 4 gibt das Fehlerkriterium an, d.h. D ist immer dann "0", wenn SYNCH=1 und $\overline{CS}$=1 vorliegt.

Die Schaltungsergänzung nach Fig. 3 eignet sich für solche Systeme, bei denen ein Maschinenprogramm fest verdrahtet in einem ROM vorliegt, nicht jedoch für Systeme, die beispielsweise mit einem sogenannten Interpreter arbeiten, d.h., bei denen Teile des Programms erst im Laufe des Programmablaufs erstellt werden.

Für den Fachmann ist eine Reihe von Abwandlungen der aufgezeigten Schaltungsbeispiele möglich. So kann beispielsweise anstelle des monostabilen Multivibrators 10 ein Zähler eingesetzt werden, der mit $\phi_2$ betaktet wird und beispielsweise jeweils bis "8" zählt.

- 11 -

Selbstverständlich ist die erfindungsgemäße Selbstüberwachungseinrichtung nicht auf Mikroprozessoren des erwähnten Typs beschränkt, sondern sie eignet sich auch für größere, z. B. für 16-Bit-Prozessoren, soweit solche Prozessoren einen Signalausgang aufweisen, der einen eindeutigen Hinweis dafür gibt, wann sich die CPU in ihren Befehl-Abrufphasen (Fetch-Cycles) befindet.

Die erfindungsgemäße Selbstüberwachungseinrichtung läßt sich ersichtlicherweise mit sehr geringem Bauteileaufwand verwirklichen und zeichnet sich durch eine ausgesprochen hohe Störsicherheit aus.

0080214

P a t e n t a n s p r ü c h e

1.   Selbstüberwachungseinrichtung für einen digitalen,
     programmsteuerbaren Ablaufsteuerschaltkreis, der einen
     Ausgangsanschluß zur Meldung seiner Befehl-Abrufphasen
     (Fetch-Cycles) aufweist,
     g e k e n n z e i c h n e t   d u r c h
     eine Zeitüberwachungsschaltung (10, 20), welche den Zeitabstand zwischen einer festgelegten Anzahl von aufeinanderfolgenden Meldeimpulsen (SYNCH) für die Befehl-Abrufphasen, z. B. den Zeitabstand zwischen zwei solcher Meldeimpulse überwacht und einen Wiederanlauf-Impuls (RESET)
     an den Ablaufsteuerschaltkreis zur Auslösung eines erneuten Wiederanlaufs eines Programms oder Teilprogramms abgibt, sobald die festgelegte Anzahl von Meldeimpulsen innerhalb einer vorgebbaren Zeitspanne nicht auftritt.

2.   Selbstüberwachungseinrichtung nach Anspruch 1,
     d a d u r c h   g e k e n n z e i c h n e t,   daß der Ab-
     laufsteuerschaltkreis ein Mikroprozessor ist.

3.   Selbstüberwachungseinrichtung nach Anspruch 1 oder 2,
     d a d u r c h   g e k e n n z e i c h n e t,   daß die
     Zeitüberwachungsschaltung
     - eine erste triggerbare Impulsstufe (10), deren Ausgangsimpulse auf eine Impulsdauer einstellbar ist, die etwas
       länger ist als der Zeitabstand zwischen zwei Meldeimpulsen (SYNCH) und dessen Triggereingang (A) durch die Meldeimpulse beaufschlagt ist und
     - eine zweite triggerbare Impulsstufe (20) aufweist, deren Triggereingang (A) mit einem Ausgang der ersten Impulsstufe (10) verbunden und die bei Umschaltung des
       Ausgangssignals der ersten Impulsstufe triggerbar ist und ausgangsseitig den Wiederanlauf-Impuls (RESET) einstellbarer Impulsdauer abgibt.

4.    Selbstüberwachungseinrichtung nach Anspruch 3,
      d a d u r c h   g e k e n n z e i c h n e t ,   daß die er-
      ste und die zweite Impulserzeugerstufe (10, 20) jeweils
      als monostabiler Multivibrator verwirklicht sind.

5.    Selbstüberwachungseinrichtung nach Anspruch 3,
      d a d u r c h   g e k e n n z e i c h n e t ,   daß die er-
      ste Impulserzeugerstufe (10) ein mehrstufiger Zähler ist,
      der durch den Systemtakt des Ablaufsteuerschaltkreises
      getaktet ist.

6.    Selbstüberwachungseinrichtung nach Anspruch 3 oder 4,
      g e k e n n z e i c h n e t   d u r c h   eine durch
      den Systemtakt getaktete bistabile Schaltstufe (30), der
      an einem Signaleingang eine logische Verknüpfung des Meldeimpulses (SYNCH) und eines auf einen Programmbereich
      bezogenen Auswahlsignals ($\overline{CS}$) zuführbar ist und die bei
      Ausbleiben wenigstens des Programmbereich-Auswahlsignals
      an einem Signalausgang (Q) ein Räumsignal zur sofortigen
      Zwangsrücksetzung an die erste Impulserzeugerstufe abgibt.

7.    Selbstüberwachungseinrichtung nach Anspruch 3 oder 4
      mit einem fest verdrahteten Programmspeicher,
      g e k e n n z e i c h n e t   d u r c h
      - einen zum Programmspeicher (31) parallel geschalteten
        Befehlslisten-Speicher (32), der an einem Signalausgang
        ein Signal bestimmter Polarität abgibt, wenn eine angewählte Adresse einer tatsächlichen Befehlsadresse im
        Programmspeicher (31) entspricht, und ein Signal anderer Polarität liefert, wenn der Adresse ein anderer Inhalt, z. B. ein Operand oder Daten zugeordnet ist, und

- eine bistabile Schaltstufe (30), der an einem Signaleingang eine logische Verknüpfung des Meldesignals
  (SYNCH) und des aus dem Adressenvergleich im Befehlslisten-Speicher (32) gewonnenen Signals ($\overline{CS}$) zuführbar
  ist und die bei Adressen ohne Befehlszuordnung an einem
  Signalausgang (Q) ein Räumsignal zur sofortigen Zwangsrücksetzung an die erste Impulserzeugerstufe (10) abgibt.

8. Selbstüberwachungseinrichtung nach Anspruch 3 oder 4
   d a d u r c h   g e k e n n z e i c h n e t ,   daß die
   zweite Impulserzeugerstufe (20) einen zweiten Triggereingang (B) aufweist, der über ein Zeitverzögerungsglied ($R_3$,
   $C_3$) an die Stromversorgung des Ablaufsteuerschaltkreises
   angeschlossen ist, und daß die Zeitkonstante des Zeitverzögerungsglieds größer gewählt ist als die der übrigen
   zeitabhängigen Bauteile derart, daß bei einer Einschaltung
   der Stromversorgung ein Anlaufimpuls (RESET) am Ausgang
   der zweiten Impulserzeugerstufe (20) nach Ablauf der
   durch das Zeitverzögerungsglied bestimmten Zeitspanne
   erscheint.

FIG. 1

T1 = k·R₁·C₁ → $T1 = k \cdot R_1 \cdot C_1$

T2 = k·R₂·C₂ → $T2 = k \cdot R_2 \cdot C_2$

T3 = k·R₃·C₃ ≫ T₂ → $T3 = k \cdot R_3 \cdot C_3 \gg T_2$

SYNCH

$\overline{CS}$ Programmbereich

$\Phi_2$

MONO 1

MONO 2

FF

CLK

CLR

$\overline{Q}$

$\overline{RESET}$ CPU

1/4

0080214

FIG. 2

**FIG. 3**

ADRESSBUS

$\overline{CS}$
PROGR.-BEREICH

ROM 1
PROGRAMM
$\overline{CS}$
31

$\overline{CB}$
ROM 2
BEFEHLS-
LISTE
32

an ③
AUSGANG

0 ≙ BEFEHL
1 ≙ FALSCH, KEIN BEFEHL
SONDERN OPERAND
ODER DATENFELD

FIG. 4

② 

③ $\overline{CS}$, Progr.-Bereich
oder Ausgang ROM 2

④ $D = \overline{SYNCH \cdot \overline{CS}}$

⑤ FF - Q, CLR

⑥ MONO 1, Q

⑦ MONO 2, $\overline{Q}$

RESET - PULS

WIEDERANLAUF

1.OPCODE

0080214

# 0080214

Europäisches
Patentamt

**EUROPÄISCHER RECHERCHENBERICHT**

Nummer der Anmeldung

EP  82 11 0918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | ELECTRONIC DESIGN, Band 29, Nr. 4, 19. Februar 1981, Seiten 192,194,196, Denville, N.J., USA R. BURZYNSKI: "Automatic reset protects muP-based systems from undervoltage, memory hangup" * Insgesamt * | 1-4,8 | G 06 F  11/00 |
| X | ELECTRONICS, Band 49, Nr. 6, 18. März 1976, Seiten 106-107, New York, USA J.R. BAINTER: "Dual-555-timer circuit restarts microprocessor" * Insgesamt * | 1-3,8 | |
| X | DE-A-2 946 081 (WABCO) * Seite 5, Zeile 9 - Seite 8, Zeile 5; Figur 2 * | 1-3,5 | |
| | | | RECHERCHIERTE SACHGEBIETE (Int. Cl. ³) |
| A | ELECTRONICS INTERNATIONAL, Band 53, Nr. 20, September 1980, Seiten 153-157, New York, USA T.W. STARNES: "Handling exceptions gracefully enhances software reliability" * Seite 154, Spalte 2, Zeilen 29-58, Zeile 156; Spalte 2, Zeilen 2-19 * | 6 | G 06 F  11/00 G 06 F  11/14 |

Der vorliegende Recherchenbericht wurde für alle Patentansprüche erstellt.

| Recherchenort DEN HAAG | Abschlußdatum der Recherche 02-03-1983 | Prüfer GUIVOL Y. |
|---|---|---|